# EUROPÄISCHE PATENTSCHRIFT

(11) **EP 2 379 376 B1**
(45) Veröffentlichungstag und Bekanntmachung des Hinweises auf die Patenterteilung: **03.10.2012**
(21) Anmeldenummer: 09749055.1
(22) Anmeldetag: 28.10.2009
(51) Int. Cl.: B60T 1/10, B60T 13/58, B60T 13/74

(54) **VERFAHREN ZUR STEUERUNG EINER BREMSBETÄTIGUNG EINER HYDRAULISCHEN FAHRZEUGBREMSANLAGE UND ELEKTROMECHANISCHER BREMSKRAFTVERSTÄRKER**
METHOD FOR CONTROLLING THE ACTIVATION OF A HYDRAULIC VEHICLE BRAKE SYSTEM AND ELECTROMECHANICAL BRAKE BOOSTER
PROCÉDÉ DE COMMANDE DE L'ACTIONNEMENT DE FREINS DANS UN SYSTÈME DE FREINAGE HYDRAULIQUE D'UN VÉHICULE ET SERVOFREIN ÉLECTROMÉCANIQUE

(30) Priorität: 18.12.2008 DE 102008054859
(43) Veröffentlichungstag der Anmeldung: 26.10.2011
(73) Patentinhaber: Robert Bosch GmbH, 70442 Stuttgart (DE)
(72) Erfinder: VOLLERT, Herbert, 71665 Vaihingen/Enz (DE); WEIBERLE, Reinhard, 71665 Vaihingen/Enz (DE)
(86) Internationale Anmeldenummer: PCT/EP2009/064199
(87) Internationale Veröffentlichungsnummer: WO 2010/069659

(56) Entgegenhaltungen:
- WO-A1-2004/101308
- DE-A1- 19 939 950
- DE-A1-102007 043 592
- US-A- 4 395 883
- US-A1- 2003 024 245

## Beschreibung

### Stand der Technik

Die Erfindung betrifft ein Verfahren zur Steuerung einer Bremsbetätigung einer hydraulischen, einen Bremskraftverstärker aufweisenden Fahrzeugbremsanlage eines Kraftfahrzeugs, das einen Elektro-Antriebsmotor aufweist, mit den Merkmalen des Oberbegriffs des Anspruchs 1. Es wird hier nicht unterschieden zwischen Steuerung und Regelung, eine Steuerung im Sinne der Erfindung umfasst auch eine Regelung und umgekehrt. Mit Bremsbetätigung ist die Betätigung der Fahrzeugbremsanlage durch einen Fahrzeugführer mit Muskelkraft von Fuß oder Hand gemeint. Das Kraftfahrzeug kann ein Elektrofahrzeug mit einem Antrieb ausschließlich mit einem Elektro-Antriebsmotor oder auch mit mehreren Elektro-Antriebsmotoren sein. Insbesondere ist die Erfindung vorgesehen für ein Hybridfahrzeug, das einen Verbrennungsmotor und zusätzlich einen Elektro-Antriebsmotor oder mehrere Elektro-Antriebsmotoren aufweist. Zur Rückgewinnung von Energie kann zum Bremsen der Elektro-Antriebsmotor als Generator betrieben werden. Ein Antriebsmoment zum Antrieb des Elektro-Antriebsmotors als Generator verzögert als Bremsmoment das Kraftfahrzeug. Der durch den Generatorbetrieb erzeugte elektrische Strom wird in einem Akkumulator gespeichert und steht zum Antrieb des Kraftfahrzeugs mit dem Elektro-Antriebsmotor zur Verfügung.

Eine Bremswirkung des Elektro-Antriebsmotors im Generatorbetrieb ist u.a. abhängig von der Fahrzeuggeschwindigkeit und beispielsweise auch vom Ladezustand des Akkumulators, bei vollständig geladenem Akkumulator ist die Bremswirkung nahezu null. Auch bei niedriger Geschwindigkeit ist die Bremswirkung gering und nimmt zum Fahrzeugstillstand hin auf Null ab. Das Abbremsen des Kraftfahrzeugs ist deswegen mit der hydraulischen Fahrzeugbremse und dem Elektro-Antriebsmotor im Generatorbetrieb gemeinsam erforderlich, wobei der Anteil, den die hydraulische Fahrzeugbremsanlage zur Bremsung beitragen muss, zwischen null und hundert Prozent schwankt. Die Steuerung der Anteile, die der Elektro-Antriebsmotor im Generatorbetrieb und die hydraulische Fahrzeugbremsanlage zur Bremswirkung beitragen, wird als "Verblenden" bezeichnet.

Es ist möglich, das "Verblenden" dem Fahrzeugführer zu überlassen, d.h. er passt seine Muskelkraft zur Bremsbetätigung der Bremswirkung des Elektro-Antriebsmotors im Generatorbetrieb an.

Eine unverzichtbare Forderung an das Bremsen eines Kraftfahrzeugs mit einem Elektro-Antriebsmotor im Generatorbetrieb ist, dass sich der Bremsweg nicht verlängern darf.

Bei elektrohydraulischen Fahrzeugbremsanlagen ist das Verblenden unbemerkt vom Fahrzeugführer vergleichsweise einfach möglich. Elektrohydraulische Fahrzeugbremsanlagen sind Fremdkraft-Bremsanlagen, bei denen die zur Bremsbetätigung erforderliche Energie nicht durch Muskelkraft eines Fahrzeugführers, sondern ausschließlich von einer Fremdenergieversorgungseinrichtung stammt, der Bremsdruck wird von einer Hydropumpe erzeugt. Der Fahrzeugführer gibt an einem Bremspedal einen Sollwert für die Bremskraft vor.

Hydraulische Fahrzeugbremsanlagen sind an sich bekannt und sollen hier nicht näher erläutert werden. Es sind auch hydraulische Fahrzeugbremsanlagen mit einer Radschlupfregelung bekannt, die für jede Radbremse ein Bremsdruckaufbauventil und ein Bremsdruckabsenkventil aufweisen, mit denen ein Radbremsdruck und damit eine Bremskraft der jeweiligen Radbremse zum Zwecke der Schlupfregelung modulierbar, d.h. steuer- bzw. regelbar ist. Es lässt sich sowohl der Radbremsdruck absenken um ein Blockieren eines Fahrzeugrads beim Bremsen zu vermeiden, als auch ein Radbremsdruck aufbauen, um ein Durchdrehen eines angetriebenen Fahrzeugrades beim Anfahren und/oder Beschleunigen zu vermeiden oder zu begrenzen und es lassen sich auch einzelne Fahrzeugräder gezielt bremsen, um in kritischen Fahrsituationen eine Schleuderneigung zu verringern.

Eine solche hydraulische Fahrzeugbremsanlage mit einer Rad schlupfregelung offenbart die internationale Patentanmeldung WO 2004/101 308 A1. Zu einer Kompensation der Verzögerung, die der Elektro-Antriebsmotor im Generatorbetrieb bewirkt, wird dort Bremsflüssigkeit aus dem Hauptbremszylinder in einen Hydrospeicher abgelassen, d. h. der Bremsdruck und die Bremswirkung der Fahrzeugbremsanlage werden abgesenkt.

Die Offenlegungsschrift DE 199 39 950 A1 offenbart einen elektromechanischen Bremskraftverstärker, dessen Verstärkungsfaktor verringert wird, um eine Verzögerungswirkung eines Elektro-Antriebsmotors im Generatorbetrieb zu kompensieren.

Als üblich anzusehen sind heutzutage Unterdruck-Bremskraftverstärker, deren Aufbau und Funktion bekannt ist und deswegen hier nicht erläutert werden soll. Auch sind elektromechanische Bremskraftverstärker bekannt, die eine Hilfskraft zur Betätigung eines Hauptbremszylinders beispielsweise elektromotorisch oder elektromagnetisch erzeugen. Beispielsweise ist aus der Offenlegungsschrift DE 100 57 557 A1 ein elektromechanischer Bremskraftverstärker mit einem Elektromagneten oder einem Linearmotor zur Erzeugung der Hilfskraft zur Bremsbetätigung bekannt. Wie ein Unterdruck-Bremskraftverstärker übt auch ein elektromechanischer Bremskraftverstärker die von ihm erzeugte Hilfskraft zusätzlich zu einer von einem Fahrzeugführer ausgeübten Muskelkraft auf einen Hauptbremszylinder der Fahrzeugbremsanlage zum Aufbau eines Bremsdrucks aus.

Die Patentanmeldungen US 2003/0024245 A1 und US 4 395 883 A offenbaren elektromechanische Bremskraftverstärker mit Elektromotoren, deren Drehbewegungen über mechanische Getriebe auf ein Kugelumlaufgetriebe übertragen werden, dessen Spindel die Kraft des Bremskraftverstärkers in die Muskelkraftbetätigung eines Hauptbremszylinders einkoppelt. Mit Magnetkupplungen sind die Elektromotoren der Bremskraftverstärker mechanisch von den Getrieben der Kugelumlaufspindeln trennbar.

Die Anwendung der Erfindung ist auch für Kraft- oder sonstige Fahrzeuge möglich, die einen Generator aufweisen, der zum Bremsen benutzt wird ohne ein elektrischer Antriebsmotor zu sein.

### Offenbarung der Erfindung

Die hydraulische Fahrzeugbremsanlage, zu deren Steuerung bei einer Bremsbetätigung das erfindungsgemäße Verfahren mit den Merkmalen des Anspruchs 1 vorgesehen ist, weist einen muskelkraft-, also fuß- oder handbetätigbaren Hauptbremszylinder auf, an den eine hydraulische Radbremse, beispielsweise eine Scheiben- oder Trommelbremse, angeschlossen ist. Ein elektromechanischer Bremskraftverstärker erhöht die Betätigungskraft des Hauptbremszylinders. Außerdem ist über ein steuerbares Ventil, insbesondere ein Magnetventil und vorzugsweise wegen der besseren Steuerbarkeit ein Proportionalventil ein Hydrospeicher an die Fahrzeugbremsanlage angeschlossen.

Das mit der Fahrzeugbremsanlage ausgerüstete und zu bremsende Kraftfahrzeug ist wie eingangs erläutert insbesondere ein Elektro- oder Hybridfahrzeug mit einem Elektro-Antriebsmotor, der zum Bremsen des Kraftfahrzeugs als Generator betreibbar ist. Ob der Elektro-Antriebsmotor beim Bremsen als Generator betrieben wird und welchen Anteil er zur Bremswirkung beiträgt, ist von der jeweiligen Fahrsituation, insbesondere von der Fahrzeuggeschwindigkeit und der geforderten Bremskraft bzw. Bremswirkung und beispielsweise auch vom Ladezustand eines Akkumulators abhängig, der mit dem elektrischen Strom geladen wird, den der Elektro-Antriebsmotor des Kraftfahrzeugs im Generatorbetrieb erzeugt. Der Anteil, den der Elektro-Antriebsmotor im Generatorbetrieb zur Bremswirkung beiträgt, schwankt und liegt zwischen null und hundert Prozent. Die Erfindung sieht vor, durch Öffnen des Ventils ein Bremsflüssigkeitsvolumen in den Hydrospeicher zu leiten, wenn bei einer Bremsbetätigung der Elektro-Antriebsmotor als Generator betrieben wird. Der Bremsdruck in der Radbremse oder in der Fahrzeugbremsanlage wird dadurch verringert, ebenso verringert sich die Bremswirkung der betroffenen Radbremsen. Erfindungsgemäß wird also die Bremswirkung der hydraulischen Fahrzeugbremsanlage verringert und dadurch die Bremswirkung des Elektro-Antriebsmotors im Generatorbetrieb vollständig oder teilweise kompensiert. Zur Steuerung des Bremsdrucks und der Bremswirkung wird das Ventil teilweise oder vorübergehend geöffnet, es kann moduliert gesteuert werden wie während einer Schlupfregelung.

Wird der Bremsdruck in der Fahrzeugbremsanlage so weit abgesenkt, dass er nicht ausreicht, eine übliche Betätigungskraft zu erzeugen, wird mit dem elektromechanischen Bremskraftverstärker eine Kraft erzeugt, die einer Betätigung des Hauptbremszylinders entgegengerichtet ist, um die übliche Betätigungskraft zu bewirken.

Die Erfindung hat den Vorteil, dass sie ein gleiches Pedalgefühl und Pedalverhalten bei einer Bremsbetätigung mit dem Elektro-Antriebsmotor im Generatorbetrieb ermöglicht wie ohne die Bremswirkung des Elektro-Antriebsmotors. Ein Fahrzeugführer merkt nichts vom Verblenden, also davon, dass ein Teil der Bremswirkung vom Elektro-Antriebsmotor im Generatorbetrieb bewirkt wird, selbst dann, wenn der Anteil während der Bremsung schwankt. Eine Abhängigkeit zwischen einer Stellung eines Bremspedals, einer Pedalkraft und der Bremswirkung ist unabhängig vom Generatorbetrieb des Elektro-Antriebsmotors oder jedenfalls ist die Änderung der Abhängigkeit so gering, dass der Fahrzeugführer sie nicht wahrnimmt. Die Erfindung wird allerdings auch dann verwirklicht, wenn sich die Abhängigkeit zwischen Pedalstellung, Pedalkraft und Bremswirkung merkbar ändern. Bei einer handbetätigten Fahrzeugbremsanlage tritt an die Stelle der Pedalstellung und Pedalkraft die Stellung eines Handbremshebels und die auf den Handbremshebel ausgeübte Handkraft.

Die Unteransprüche haben vorteilhafte Ausgestaltungen und Weiterbildungen der im Anspruch 1 angegebenen Erfindung zum Gegenstand.

Gegenstand des nebengeordneten Anspruchs 10 ist ein Bremskraftverstärker, der speziell für die Ausführung der erfindungsgemäßen Verfahrens ausgebildet ist.

### Kurze Beschreibung der Zeichnung

Die Erfindung wird nachfolgend anhand einer in der Zeichnung dargestellten Ausführungsform näher erläutert. Es zeigen:

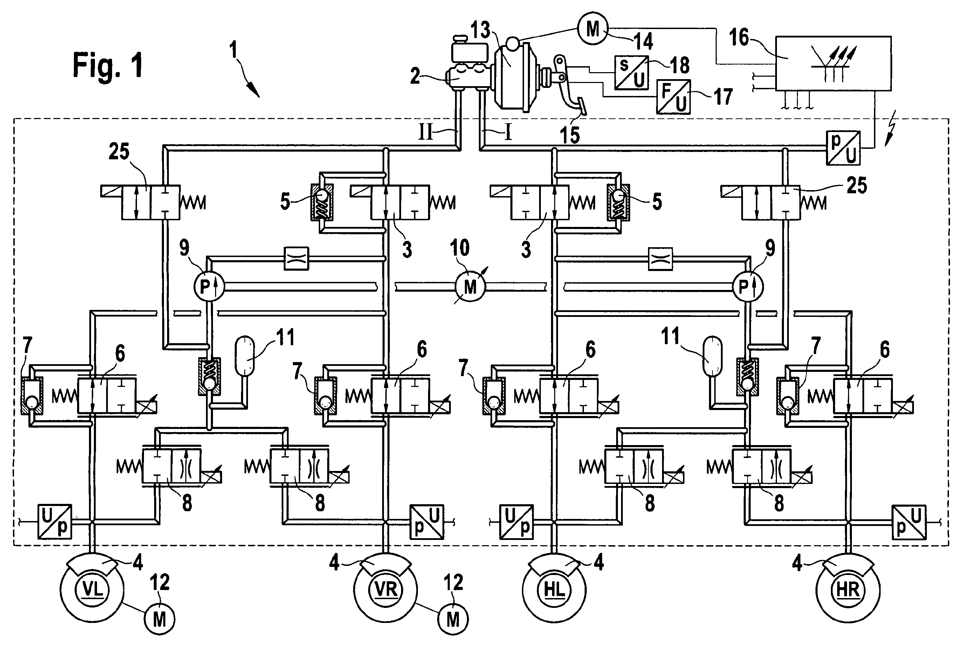

- Figur 1: einen hydraulischen Schaltplan einer hydraulischen Fahrzeugbremsanlage zur Durchführung des erfindungsgemä-βen Verfahrens; und
- Figur 2: eine Schemadarstellung eines elektromechanischen Bremskraftverstärkers .

### Ausführungsform der Erfindung

Die in der Zeichnung dargestellte erfindungsgemäße hydraulische Fahrzeugbremsanlage 1 weist eine Schlupfregelung (Blockierschutzregelung ABS; Antriebsschlupfregelung ASR; Fahrdynamikregelung FDR, ESP) auf. Sie ist als Zweikreisbremsanlage mit zwei Bremskreisen I, II ausgebildet, die an einen Hauptbremszylinder 2 angeschlossen sind. Jeder Bremskreis I, II ist über ein Trennventil 3 an den Hauptbremszylinder 2 angeschlossen. Die Trennventile 3 sind in ihrer stromlosen Grundstellung offene 2/2-Wege-Magnetventile. Den Trennventilen 3 ist jeweils ein vom Hauptbremszylinder 2 zu Radbremsen 4 durchströmbares Rückschlagventil 5 hydraulisch parallel geschaltet. An das Trennventil 3 jedes Bremskreis I, II sind die Radbremsen 4 über Bremsdruckaufbauventile 6 angeschlossen. Die Bremsdruckaufbauventile 6 sind in ihrer stromlosen Grundstellung offene 2/2-Wege-Magnetventile. Ihnen sind Rückschlagventile 7 parallel geschaltet, die von den Radbremsen 4 in Richtung zum Hauptbremszylinder 2 durchströmbar sind.

An jede Radbremse 4 ist ein Bremsdruckabsenkventil 8 angeschlossen, die gemeinsam an eine Saugseite einer Hydropumpe 9 angeschlossen sind. Die Bremsdruckabsenkventile 8 sind als in ihrer stromlosen Grundstellung geschlossene 2/2-Wege-Magnetventile ausgebildet. Eine Druckseite der Hydropumpe 9 ist zwischen den Bremsdruckaufbauventilen 6 und den Trennventilen 3 angeschlossen, d. h. die Druckseite der Hydropumpe 9 ist über die Bremsdruckaufbauventile 6 mit den Radbremsen 4 und über das Trennventil 3 mit dem Hauptbremszylinder 2 verbunden. Die Bremsdruckaufbauventile 6 und die Bremsdruckabsenkventile 8 sind wegen der besseren Steuer- und Regelbarkeit Proportionalventile.

Jeder der beiden Bremskreise I, II weist eine Hydropumpe 9 auf, die gemeinsam mit einem Elektromotor 10 antreibbar sind. Die Saugseiten der Hydropumpen 9 sind an die Bremsdruckabsenkventile 8 angeschlossen. Auf der Saugseite der Hydropumpen 9 sind Hydrospeicher 11 zur Aufnahme und Zwischenspeicherung von Bremsflüssigkeit vorhanden, die durch Öffnen der Bremsdruckabsenkventile 8 während einer Schlupfregelung aus den Radbremsen 4 ausströmt.

Die Bremsdruckaufbauventile 6 und die Bremsdruckabsenkventile 8 bilden Radbremsdruckmodulationsventilanordnungen, mit denen bei angetriebener Hydropumpe 9 eine radindividuelle Bremsdruckregelung zur Schlupfregelung in an sich bekannter und hier nicht zu erläuternder Weise möglich ist. Die Trennventile 3 werden bei einer Schlupfregelung geschlossen, d.h. die Fahrzeugbremsanlage 1 wird hydraulisch vom Hauptbremszylinder 2 getrennt.

Durch ein Ansaugventil 25 in jedem Bremskreis I, II ist die Saugseite der Hydropumpe 9 mit dem Hauptbremszylinder 2 verbindbar. Die Ansaugventile 25 sind in ihrer stromlosen Grundstellung geschlossene 2/2-Wege-Magnetventile. Werden Sie geöffnet, saugt die Hydropumpe 9 Bremsflüssigkeit unmittelbar aus dem Hauptbremszylinder 2, wodurch bei unbetätigtem Hauptbremszylinder 2 bzw. druckloser Fahrzeugbremsanlage 1 ein schnellerer Bremsdruckaufbau mit der Hydropumpe 9 möglich ist.

Das mit der Fahrzeugbremsanlage 1 ausgerüstete Kraftfahrzeug weist einen oder mehrere Elektro-Antriebsmotoren 12 zum Antrieb eines oder mehrer Fahrzeugräder auf. Beispielhaft sind in der Zeichnung zwei Elektro-Antriebsmotoren 12 dargestellt, die zwei Fahrzeugräder einer Fahrzeugachse, im Ausführungsbeispiel die beiden Vorderräder, antreiben. Der Antrieb kann auch mit einem gemeinsamen Elektro-Antriebsmotor erfolgen. Zusätzlich kann ein in der Zeichnung nicht dargestellter Verbrennungsmotor zum Antrieb des Kraftfahrzeugs vorhanden sein, solche Kraftfahrzeuge werden als Hybridfahrzeuge bezeichnet.

Der Hauptbremszylinder 2 weist einen elektromechanischen Bremskraftverstärker 13 der mit Hilfe eines Elektromotors 14 eine Hilfskraft erzeugt, die zusammen mit einer Muskelkraft, die über ein Bremspedal 15 aufgebracht wird, den Hauptbremszylinder 2 betätigt. Der symbolisch dargestellte Elektromotor 14 ist in den Bremskraftverstärker 13 integriert. Der Elektromotor 14 kann ein rotatorischer Motor sein, dessen Drehbewegung über ein Getriebe untersetzt und in eine translatorische Bewegung zur Betätigung des Hauptbremszylinders 2 gewandelt wird. Es ist auch eine Ausführung des Bremskraftverstärkers 13 mit einem Elektro-Linearmotor oder einem Elektromagneten möglich. Die Aufzählung ist nicht abschließend.

Zur Steuerung oder Regelung der Fahrzeugbremsanlage 1 einschließlich des Bremskraftverstärkers 13 und der Elektro-Antriebsmotoren 12 ist ein elektronisches Steuergerät 16 vorhanden. Mit einem Kraftsensor 17 ist eine auf das Bremspedal 15 ausgeübte Pedalkraft und mit einem Wegsensor 18 eine Stellung und auch eine Geschwindigkeit oder Beschleunigung des Bremspedals 15 messbar.

Bei einer Betätigung des Bremspedals 15 werden die Elektro-Antriebsmotoren 12 als Generatoren betrieben, sofern der Fahrzustand das zulässt, insbesondere die Fahrzeuggeschwindigkeit hoch genug ist. Der erzeugte elektrische Strom wird in einem nicht dargestellten Akkumulator gespeichert. Eine Bremswirkung der Fahrzeugbremsanlage 1 ist durch die als Generatoren betriebenen Elektro-Antriebsmotoren 12 erhöht. Zur Kompensation werden ein oder mehrere Bremsdruckabsenkventile 8 geöffnet, so dass Bremsflüssigkeit aus den zugeordneten Radbremsen 4 ausströmt und in die Hydrospeicher 11 strömt. Vorzugsweise werden die Bremsdruckabsenkventile 8 geöffnet, deren zugeordnete Radbremsen 4 die mit den Elektro-Antriebsmotoren 12 angetriebenen und im Generatorbetrieb gebremsten Fahrzeugräder bremsen. Dadurch bleibt eine Bremskraftverteilung auf die Fahrzeugräder erhalten, wie sie mit der Fahrzeugbremsanlage 1 ohne die Elektro-Antriebsmotoren 12 im Generatorbetrieb herrscht. Die Bremsdruckabsenkventile 8 sind wie bereits gesagt Proportionalventile, so dass sich der Radbremsdruck in den Radbremsen 4 so regeln lässt, dass das von den Elektro-Antriebsmotoren 12 im Generatorbetrieb verursachte Bremsmoment kompensiert oder näherungsweise kompensiert wird. Ein Verstärkungsfaktor des Bremskraftverstärkers 13 wird so weit verringert, dass am Bremspedal 15 die gleiche Pedalkraft oder jedenfalls näherungsweise die gleiche Pedalkraft wirkt, wie sie bei gleichem Pedalweg ohne die Bremswirkung der Elektro-Antriebsmotoren 12 im Generatorbetrieb wirken würde, also ohne Absenkung des Bremsdrucks durch Öffnen der Bremsdruckabsenkventile 8. Pedalweg und Pedalkraft sind also, zumindest näherungsweise, gleich wie bei einer Bremsung ohne die Elektro-Antriebsmotoren 12 im Generatorbetrieb, ein Fahrzeugführer bemerkt nichts davon, dass ein Teil der Bremswirkung nicht auf der Fahrzeugbremsanlage 1, sondern auf den Elektro-Antriebsmotoren 12 im Generatorbetrieb beruht. Dieses sog. "Verblenden", also die Regelung des Anteils der Bremswirkung der Fahrzeugbremsanlage 1 und der Elektro-Antriebsmotoren 12 im Generatorbetrieb soll für den Fahrzeugführer unmerklich erfolgen.

Das Verhältnis des Anteils der Bremswirkung der Fahrzeugbremsanlage 1 zur Bremswirkung der Elektro-Antriebsmotoren 12 im Generatorbetrieb schwankt bei einer Bremsung. Muss die Bremskraft der Fahrzeugbremsanlage 1 erhöht werden, beispielsweise weil die Bremswirkung der Elektro-Antriebsmotoren 12 abnimmt, kann das durch Änderung des Verstärkungsfaktors des Bremskraftverstärkers 13 und/oder durch Erhöhung des Bremsdrucks mit der Hydropumpe 9 erfolgen. Zum Erhöhen des Bremsdrucks kann das Ansaugventil 25 geöffnet werden, so dass die Hydropumpe 9 Bremsflüssigkeit aus dem Hauptbremszylinder 2 ansaugt. Die Ansaugventile 25 müssen geöffnet werden, wenn die Bremsflüssigkeit im Hydrospeicher 11 nicht ausreicht. Das Trennventil 3 kann geschlossen werden, um Rückwirkungen durch Druckpulsationen der Hydropumpe 9 auf den Hauptbremszylinder 2 zu vermeiden. Solche Druckpulsationen sind im Bremspedal 15 spürbar. Sie entstehen bauartbedingt durch die diskontinuierliche Förderweise von Kolbenpumpen, die üblicherweise verwendet werden.

Bei einer Fahrzeugbremsanlage 1 mit einer Schlupfregeleinrichtung sind die Bremsdruckabsenkventile 8 und der Hydrospeicher 11, mit denen sich der Radbremsdruck in den Radbremsen 4 absenken lässt, vorhanden. Das erfindungsgemäße Verfahren benötigt deswegen keine zusätzlichen hydraulischen Bauteile.

Der elektromechanische Bremskraftverstärker 13 ermöglicht eine leichtere Steuerung oder Regelung des Verstärkungsfaktors als beispielsweise ein Unterdruck-Bremskraftverstärker, weswegen ein elektromechanischer Bremskraftverstärker 13 bevorzugt wird. Ein weiterer Vorteil des elektromechanischen Bremskraftverstärkers 13 ist die Möglichkeit, eine Kraft auf das Bremspedal 15 auszuüben, die der Betätigung des Hauptbremszylinders 2 entgegengerichtet ist. Das kann auch als negativer Verstärkungsfaktor des Bremskraftverstärkers 13 aufgefasst werden. Dadurch ist es möglich, die übliche Pedalkraft am Bremspedal 15 zu erzeugen, wenn der Bremsdruck in der Fahrzeugbremsanlage 1 zu niedrig dafür ist, die übliche Pedalkraft zu bewirken, weil der Bremsdruck mit den Bremsdruckabsenkventilen 8 dafür zu stark abgesenkt wird.

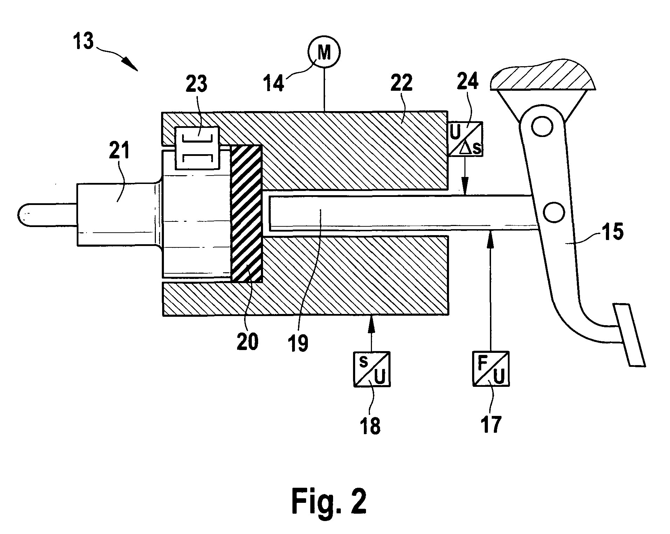

Figur 2 zeigt eine Ausführungsform des elektromechanischen Bremskraftverstärkers 13 in schematisierter, vereinfachter Darstellung. Der Bremskraftverstärker 13 weist eine Kolbenstange 19 auf, die gelenkig mit dem Bremspedal 15 verbunden ist und mit der eine auf das Bremspedal 15 ausgeübte Muskelkraft über eine Reaktionsscheibe 20 auf eine Druckstange 21 übertragbar ist. Die Druckstange 21 beaufschlagt in üblicher Weise einen Kolben des in Figur 2 nicht dargestellten Hauptbremszylinders 2. Au-βerdem weist der Bremskraftverstärker 13 einen elektromechanischen Aktuator 22 auf, mit dem ebenfalls über die Reaktionsscheibe 20 eine Hilfskraft auf die Druckstange 21 übertragbar ist. Die Hilfskraft ist die vom Aktuator 22 erzeugte Kraft. Symbolisch dargestellt zur Krafterzeugung ist der Elektromotor 14, wobei es sich auch um einen Linearmotor handeln kann. Ebenfalls ist eine Hilfskrafterzeugung mit einem Elektromagneten möglich (nicht dargestellt). Die Reaktionsscheibe 20 ist ein gummielastischer Körper, der die Muskelkraft von der Pedalstange 19 und die vom Aktuator 22 erzeugte Hilfskraft als Druckkräfte auf die Druckstange 21 überträgt. Eine Kraftübertragung vom Bremskraftverstärker 13 auf den Hauptbremszylinder 2 ist somit nur im Sinne einer Betätigung des Hauptbremszylinders 2 möglich.

Um mit dem Aktuator 22 des Bremskraftverstärkers 13 die weiter oben beschriebene, der Betätigungsrichtung entgegengerichtete Kraft auf die Kolbenstange 19 ausüben zu können, weist der Bremskraftverstärker 13 eine schaltbare Kupplung 23 auf, beispielsweise eine Magnetkupplung. In der in Figur 2 dargestellten Ausführungsform ist mit der Kupplung 23 der Aktuator 22 mit der Druckstange 21 verbindbar, so dass eine der Betätigungsrichtung des Hauptbremszylinders 2 entgegengerichtete, in Figur 2 also nach rechts wirkende Kraft vom Aktuator 22 über die Kupplung 23, die Druckstange 21 und die Reaktionsscheibe 20 auf die Kolbenstange 19 ausübbar ist, welche mit dem Bremspedal 15 gelenkig verbunden ist. Die Kupplung 23 ermöglicht die Erzeugung einer Pedalkraft mit dem Aktuator 22, die der Betätigungsrichtung des Hauptbremszylinders 2 entgegengerichtet ist, wenn ein Hydraulikdruck in der Fahrzeugbremsanlage 1 und folglich im Hauptbremszylinder 2 nicht ausreicht, um eine Pedalkraft am Bremspedal 15 in gewünschter Höhe zu bewirken. Dadurch ist es möglich, immer die übliche bzw. gewohnte, vom Pedalweg abhängige Pedalkraft zu erzeugen, auch wenn der Hydraulikdruck in der Fahrzeugbremsanlage 1 zur Kompensation der Bremswirkung der Elektro-Antriebsmotoren 12 im Generatorbetrieb abgesenkt ist. Selbst bei drucklosem Hauptbremszylinder 2 lässt sich eine grundsätzlich beliebig große Pedalkraft mit dem Aktuator 22 des Bremskraftverstärkers 13 erzeugen.

Die Kupplung 23 ist allgemein als ein Element zu verstehen, über das eine Kraft vom Aktuator 22, die einer Betätigungsrichtung des Hauptbremszylinders 2 entgegengerichtet ist, auf die Pedalstange 19 übertragbar, wenn die Kupplung 23 geschlossen wird. Die Kupplung 23 kann anders als gezeichnet beispielsweise auch so angeordnet sein, dass sie den Aktuator 22 mit der Pedalstange 19 verbindet. Vorzugsweise ist die mit der Kupplung 23 übertragbare Kraft begrenzt, so dass eine Muskelkraftbetätigung des Hauptbremszylinders 2 bei geschlossener Kupplung 23 auch bei blockiertem Aktuator 22 oder bei der Betätigung entgegengerichteter Kraft des Aktuators 22 möglich ist. Zur Steuerung bzw. Regelung weist der Bremskraftverstärker 13 außer dem Kraftsensor 17 und dem Wegsensor 18 einen Lagesensor 24 auf, mit dem eine Verschiebung der Pedalstange 19 gegenüber dem Aktuator 22 messbar ist. Die Kupplung 23 ist so ausgeführt, dass sie auch bei einer Verschiebung der Kolbenstange 19 gegenüber dem Aktuator 22 einrückbar ist.

## Patentansprüche

1. Verfahren zur Steuerung einer Bremsbetätigung einer hydraulischen Fahrzeugbremsanlage (1) eines Kraftfahrzeugs, das einen Elektro-Antriebsmotor (12) aufweist, der zum Bremsen des Kraftfahrzeugs als Generator betreibbar ist, wobei die Fahrzeugbremsanlage (1) einen muskelkraftbetätigbaren Hauptbremszylinder (2), an den eine Radbremse (4) angeschlossen ist, und einen Hydrospeicher (11), der über ein Ventil (8) an die Fahrzeugbremsanlage (1) angeschlossen ist, aufweist, wobei wenn bei einer Bremsbetätigung der Elektro-Antriebsmotor (12) als Generator betrieben wird, durch Öffnen des Ventils (8) ein Bremsflüssigkeitsvolumen in den Hydrospeicher (11) geleitet und dadurch ein Radbremsdruck in der Radbremse (4) verringert wird, **dadurch gekennzeichnet, dass** der Hauptbremszylinder (2) einen elektromechanischen Bremskraftverstärker (13) aufweist, mit dem eine Kraft auf ein Muskelkraftbetätigungselement (15, 19) ausgeübt wird, die einer Betätigung des Hauptbremszylinders (2) entgegengerichtet ist, wenn ein Bremsdruck in der Fahrzeugbremsanlage (1) zu niedrig ist, um eine übliche am Muskelkrapt betätigungselement (15,19) Muskel kraft erzeugen.

2. Verfahren nach Anspruch 1, **dadurch gekennzeichnet, dass** eine Abhängigkeit der Verzögerung des Kraftfahrzeugs von der Muskelkraft zur Betätigung des Hauptbremszylinders (2) und/oder einem Betätigungsweg gleich wie bei einer Bremsung ohne Generatorbetrieb des Elektro-Antriebsmotors (12) ist.

3. Verfahren nach Anspruch 1, **dadurch gekennzeichnet, dass** ein Verstärkungsfaktor des Bremskraftverstärkers (13) bei einer Bremsbetätigung mit Generatorbetrieb des Elektro-Antriebsmotors (12) reduziert wird.

4. Verfahren nach Anspruch 1, **dadurch gekennzeichnet, dass** die Fahrzeugbremsanlage (1) eine Schlupfregelung aufweist, und dass das Ventil (8) ein Bremsdruckabsenkventil (8) ist, das zu einer Absenkung des Radbremsdrucks bei einer Schlupfregelung an die Radbremse (4) angeschlossen ist.

5. Verfahren nach Anspruch 1, **dadurch gekennzeichnet, dass** die Fahrzeugbremsanlage (1) eine Hydropumpe (9) aufweist, mit der ein Radbremsdruck in der Radbremse (4) erzeugt und erhöht werden kann.

6. Verfahren nach Anspruch 1, **dadurch gekennzeichnet, dass** der Radbremsdruck in den Radbremsen (4) der Fahrzeugräder verringert wird, die mit dem Elektro-Antriebsmotor (12) im Generatorbetrieb gebremst werden.

7. Verfahren nach Anspruch 1, **dadurch gekennzeichnet, dass** der Bremskraftverstärker (13) eine Relativbewegung zwischen einem Muskelkraftbetätigungselement (15, 19) des Hauptbremszylinders (2) und einem Kolben des Hauptbremszylinders (2) ermöglicht

8. Verfahren nach Anspruch 1, **dadurch gekennzeichnet, dass** der Bremskraftverstärker (13) ein elektromechanischer Bremskraftverstärker (13) ist.

9. Verfahren nach Anspruch 1, **dadurch gekennzeichnet, dass** die Fahrzeugbremsanlage (1) einen Bremskraftverstärker (13) aufweist, der bei einer Bremsbetätigung eine Hilfskraft zusätzlich zur Muskelkraft auf den Hauptbremszylinder (2) ausübt.

10. Verfahren nach Anspruch 1, **dadurch gekennzeichnet, dass** der Bremskraftverstärker (13) einen elektromechanischen Aktuator (22), dessen Kraft als Hilfskraft einen Kolben eines Hauptbremszylinders (2) beaufschlagt, und eine schaltbare Kupplung (23), die in eingerücktem Zustand den Aktuator (22) mit einem Muskelkraftbetätigungselement (15, 19) verbindet, aufweist, so dass eine Kraft des Aktuators (22), die einer Betätigungsrichtung des Hauptbremszylinders (2) entgegengerichtet ist, auf das Muskelkraftbetätigungselement (15, 19) übertragbar ist.

11. Verfahren nach Anspruch 10, **dadurch gekennzeichnet, dass** die mit der Kupplung (23) maximal übertragbare Kraft begrenzt ist.

## Claims

1. Method for controlling a brake actuation of a hydraulic vehicle brake system (1) of a motor vehicle which has an electric drive motor (12) which, in order to brake the motor vehicle, can be operated as a generator, wherein the vehicle brake system (1) has a muscle-force-actuable master brake cylinder (2), to which a wheel brake (4) is connected, and a hydraulic accumulator (11), which is connected via a valve (8) to the vehicle brake system (1), wherein, when the electric drive motor (12) is operated as a generator during braking, a brake fluid volume is conducted into the hydraulic accumulator (11), and a wheel brake pressure in the wheel brake (4) is thereby reduced, by opening the valve (8), **characterized in that** the master brake cylinder (2) has an electromechanical brake force booster (13) by means of which a force which opposes an actuation of the master brake cylinder (2) is exerted on a muscle-force actuation element (15, 19) when a brake pressure in the vehicle brake system (1) is too low to generate a conventional muscle force at the muscle-force actuation element (15, 19).

2. Method according to Claim 1, **characterized in that** a dependency of the deceleration of the motor vehicle on the muscle force for actuating the master brake cylinder (2) and/or on an actuation travel is the same as during a braking operation in which the electric drive motor (12) is not operated as a generator.

3. Method according to Claim 1, **characterized in that** a boost factor of the brake force booster (13) is reduced during a brake actuation in which the electric drive motor (12) is operated as a generator.

4. Method according to Claim 1, **characterized in that** the vehicle brake system (1) exhibits slip control, and **in that** the valve (8) is a brake pressure reduction valve (8) which, for the purpose of reducing the wheel brake pressure during slip control phases, is connected to the wheel brake (4).

5. Method according to Claim 1, **characterized in that** the vehicle brake system (1) has a hydraulic pump (9) by means of which a wheel brake pressure can be generated and increased in the wheel brake (4).

6. Method according to Claim 1, **characterized in that** the wheel brake pressure is reduced in those wheel brakes (4) of the vehicle wheels which are braked by the electric drive motor (12) when it is operated as a generator.

7. Method according to Claim 1, **characterized in that** the brake force booster (13) permits a relative movement between a muscle-force actuation element (15, 19) of the master brake cylinder (2) and a piston of the master brake cylinder (2).

8. Method according to Claim 1, **characterized in that** the brake force booster (13) is an electromechanical brake force booster (13).

9. Method according to Claim 1, **characterized in that** the vehicle brake system (1) has a brake force booster (13) which, during a brake actuation, exerts on the master brake cylinder (2) an assistance force additional to the muscle force.

10. Method according to Claim 1, **characterized in that** the brake force booster (13) has an electromechanical actuator (22), whose force acts as an assistance force on a piston of a master brake cylinder (2), and a switchable coupling (23) which, in an engaged state, connects the actuator (22) to a muscle-force actuation element (15, 19), such that a force, which is directed counter to an actuation direction of the master brake cylinder (2), of the actuator (22) can be transmitted to the muscle-force actuation element (15, 19).

11. Method according to Claim 10, **characterized in that** the maximum force that can be transmitted via the coupling (23) is limited.

## Revendications

1. Procédé de commande de l'actionnement de freins d'une installation de freinage hydraulique (1) d'un véhicule automobile, qui présente un moteur d'entraînement électrique (12) qui peut être utilisé en tant que générateur pour freiner le véhicule automobile, l'installation de freinage du véhicule (1) présentant un cylindre de frein principal (2) pouvant être actionné par la force musculaire, auquel est raccordé un frein de roue (4), et un accumulateur hydraulique (11), qui est raccordé par le biais d'une soupape (8) à l'installation de freinage du véhicule (1), dans lequel un volume de liquide de frein est introduit dans l'accumulateur hydraulique (11) par ouverture de la soupape (8) lorsque le moteur d'entraînement électrique (12) fonctionne comme générateur en cas d'actionnement des freins, et de ce fait une pression de frein de roue dans le frein de roue (4) est réduite, **caractérisé en ce que** le cylindre de frein principal (2) présente un servofrein électromécanique (13) avec lequel une force est exercée sur un élément d'actionnement par force musculaire (15, 19), laquelle est opposée à un actionnement du cylindre de frein principal (2) quand une pression de freinage dans l'installation de freinage du véhicule (1) est trop faible pour produire une force musculaire usuelle sur l'élément d'actionnement par force musculaire (15, 19).

2. Procédé selon la revendication 1, **caractérisé en ce qu'**une relation de dépendance entre le ralentissement du véhicule et la force musculaire pour l'actionnement du cylindre de frein principal (2) et/ou une course d'actionnement est égale à celle lors d'un freinage sans que le moteur d'entraînement électrique (12) ne fonctionne en mode générateur.

3. Procédé selon la revendication 1, **caractérisé en ce qu'**un facteur d'amplification du servofrein (13) est réduit lors d'un actionnement du frein en mode générateur du moteur d'entraînement électrique (12).

4. Procédé selon la revendication 1, **caractérisé en ce que** l'installation de freinage de véhicule (1) présente une régulation du patinage, et **en ce que** la soupape (8) est une soupape de réduction de la pression des freins (8) qui est raccordée au frein de roue (4) pour réduire la pression des freins en cas de régulation du patinage.

5. Procédé selon la revendication 1, **caractérisé en ce que** l'installation de freinage de véhicule (1) présente une pompe hydraulique (9) avec laquelle une pression de freinage des roues peut être produite et augmentée dans le frein de roue (4).

6. Procédé selon la revendication 1, **caractérisé en ce que** la pression de frein de roue est réduite dans les freins de roue (4) des roues du véhicule qui sont freinées avec le moteur d'entraînement électrique (12) en mode générateur.

7. Procédé selon la revendication 1, **caractérisé en ce que** le servofrein (13) permet un mouvement relatif entre un élément d'actionnement par la force musculaire (15, 19) du cylindre de frein principal (2) et un piston du cylindre de frein principal (2).

8. Procédé selon la revendication 1, **caractérisé en ce que** le servofrein (13) est un servofrein électromécanique (13).

9. Procédé selon la revendication 1, **caractérisé en ce que** l'installation de freinage de véhicule (1) présente un servofrein (13) qui, dans le cas de l'actionnement des freins, exerce une force auxiliaire supplémentaire à la force musculaire sur le cylindre de frein principal (2).

10. Procédé selon la revendication 1, **caractérisé en ce que** le servofrein (13) présente un actionneur électromécanique (22) dont la force sollicite en tant que force auxiliaire un piston d'un cylindre de frein principal (2), et un embrayage commutable (23) qui, dans l'état embrayé, relie l'actionneur (22) à un élément d'actionnement par force musculaire (15, 19), de sorte qu'une force de l'actionneur (22) qui est opposée à un sens d'actionnement du cylindre de frein principal (2), puisse être transmise à l'élément d'actionnement par force musculaire (15, 19).

11. Procédé selon la revendication 10, **caractérisé en ce que** la force maximale transmissible par l'embrayage (23) est limitée.
